# EUROPÄISCHE PATENTSCHRIFT

(11) **EP 1 795 465 B1**
(45) Veröffentlichungstag und Bekanntmachung des Hinweises auf die Patenterteilung: **06.06.2012**
(21) Anmeldenummer: 06024680.8
(22) Anmeldetag: 29.11.2006
(51) Int. Cl.: B65G 15/14, B65G 15/42

(54) **Riemen zum Transportieren von Gefässen**
Belt for transporting vessels
Courroies pour le transport de récipients

(30) Priorität: 06.12.2005 DE 202005019111 U
(43) Veröffentlichungstag der Anmeldung: 13.06.2007
(60) Teilanmeldung: 11182758.0
(73) Patentinhaber: Krones AG, 93073 Neutraubling (DE)
(72) Erfinder: Zistler, Johann, 93342 Mitterfecking (DE); Dünzinger, Bernhard, 84069 Unterdeggenbach (DE)
(74) Vertreter: Grünecker, Kinkeldey, Stockmair & Schwanhäusser

(56) Entgegenhaltungen:
- EP-A- 1 291 304
- DE-U1- 29 617 281
- DE-U1- 29 821 826
- GB-A- 1 175 094
- US-A- 4 798 281

## Beschreibung

Die Erfindung betrifft eine Inspektionsmaschine zum Kontrollieren von Gefäßen gemäß dem Oberbegriff des Anspruchs 1, wie sie aus der DE 298 21 826 U1 bekannt ist.

Entsprechende Riemen zum Transportieren von Gefäßen oder dgl. Gegenständen in einer Behandlungsmaschine, wie z.B. einer Gefäßinspektionsmaschine, sind aus DE 298 21 826 U1 (siehe Fig. 2) bekannt. Zum bodenfreien Transportieren von Flaschen in Inspektionsmaschinen oder anderen Gefäßbehandlungsmaschinen werden diese Riemen durch eine paarweise gegenüberliegende Anordnung zur Bildung eines Flaschenförderkanals verwendet. Ihr gegenseitiger Zwischenabstand ist zumindest geringfügig kleiner gewählt als der Außendurchmesser der Flaschen. Dadurch können in diesen Flaschenkanal eintretende Flaschen seitlich zwischen den elastischen Riemen eingeklemmt und im weiteren Verlauf reibschlüssig gefördert werden.

Die hierfür zum Einsatz kommenden Riemen bestehen aus einem Zahnriemen mit einer einseitig angeformten Verzahnung und einer auf der gegenüberliegenden Seite angeordneten elastischen Schwammauflage, die mit den Flaschen reibschlüssig in Eingriff gebracht wird. Um eine exakte vertikale Führung des auf einer geschlossenen Bahn in einer horizontalen Ebene umlaufenden endlosen Riemens zu gewährleisten, besitzt dieser auf seiner verzahnten Seite eine in etwa in der Mitte der Zähne längs zur Transportrichtung durchgehend verlaufende Stegleiste.

Die erwähnte Schwammauflage weist eine weitgehend offene Porenstruktur auf, in die Wasser, Reinigungsmittel, Bakterien, Hefesporen, Schmutz und andere unerwünschte Stoffe eindringen und verbleiben können. Dieser Umstand ist insbesondere in aseptisch arbeitenden Abfülllinien für Getränke oder Lebensmittel nicht tragbar, da hier keimfreie Gefäße wie Flaschen aus Glas oder Kunststoff einem dem Befüllungsprozess vorangehenden Inspektionsschritt zur Überprüfung der leeren Gefäße unterzogen werden und dabei verkeimt werden könnten.

Das Dokument DE 298 21 826 zeigt eine Inspektionseinrichtung zum Kontrollieren von Flaschen mit einer Riemenstation, die zwei Riemen umfasst, wobei die Riemen derart einander mit Abstand gegenüberliegend in einer Umlaufebene angeordnet und antreibbar sind, dass die Riemenstation die Flaschen bodenfrei transportiert, wobei jeder der zwei Riemen einen Treibriemen und eine Auflage umfasst, wobei die Auflage aus einem schwammartigen Material gefertigt ist.

Das Dokument FR 2 265 637 behandelt eine Transportvorrichtung zum Transportieren von Paketen auf beweglichen Rollen mit einer Riemenstation, die zwei Riemen umfasst, wobei die Riemen derart einander mit Abstand gegenüberliegend in einer Umlaufebene angeordnet und antreibbar sind, dass die Riemenstation die Pakete auf den beweglichen Rollen transportiert.

Der Erfindung liegt demzufolge die Aufgabe zugrunde, einen für erhöhte hygienische Anforderungen geeigneten Riemen zum Transportieren von Gefäßen oder dgl. in Behandlungsmaschinen anzugeben.

Die Aufgabe wird durch den Gegenstand des Anspruchs 1 gelöst.

Der beispielsweise als Zahnriemen ausgebildete Treibriemen ist an seiner von der Antriebsverzahnung wegweisenden Seite mit einer elastischen Auflage versehen, die eine durchgehend geschlossene, porenfreie Oberfläche besitzt. Durch das Fehlen von Hohlräumen im Material der Auflage ist nicht nur das Einnisten unerwünschter Substanzen ausgeschlossen, sondern auch eine Behandlung mit Sterilisationsmitteln, wie Chemikalien, Dampf, UV-Bestrahlung oder Heißwasser möglich, um überhaupt erst einen keimfreien, sterilen Zustand des Riemens herbeizuführen.

Als Materialien kommen alle den Anforderungen entsprechende elastische Natur- oder Kunstwerkstoffe wie Elastomere, Gummi, Kautschuk oder Mischungen verschiedener Werkstoffe in Betracht. Auf Grund der vorzüglichen chemischen und thermischen Beständigkeit ist insbesondere elastisches PVC gut für diese Aufgabe geeignet.

Erfindungsgemäß weist die mit den Gefäßen in Eingriff bringbare Oberfläche der Auflage eine Struktur auf, die beispielsweise durch eine Vielzahl von gleichmäßig angeordnete, erhaben ausgeformte, noppen-, finger-, lamellen- oder zahnartige Elemente gebildet sein kann, jedoch insgesamt einteilig ist und dadurch eine geschlossene Oberfläche besitzt.

Die Elemente können in nur einer oder mehreren parallelen Reihen in Richtung der Längserstreckung des Riemens verlaufend ausgerichtet sein und gegenüber benachbarten Reihen einen Teilungsversatz aufweisen. Durch diese federelastischen Elemente ist mit nur geringer punktueller Krafteinwirkung auf die Gefäße ein sicherer reibschlüssiger Transport ohne Bodenunterstützung möglich.

Weitere vorteilhafte Ausgestaltungen sind Gegenstand der verbleibenden Unteransprüche.

Nachfolgend werden Ausführungsbeispiele anhand der Figuren erläutert. Es zeigt:
- Fig. 1: eine Draufsicht einer Inspektionsmaschine mit einem Riemenpaar in schematischer Darstellung,
- Fig. 2: einen Schnitt durch einen perspektivisch dargestellten Riemen entsprechend einer ersten Ausführung für eine Maschine gemäß Fig.1 und
- Fig. 3: einen Schnitt durch einen perspektivisch dargestellten Riemen entsprechend einer zweiten Ausführung.

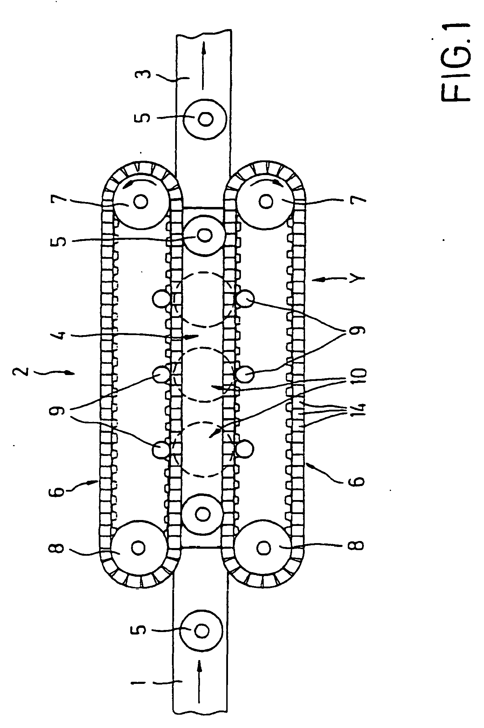

Die Inspektionsmaschine nach Fig. 1 besitzt einen Zuförderer 1, einen Abförderer 3 und eine dazwischen liegende Riemenstation 2. Zwischen dem Zuförderer 1 und dem Abförderer 3 befindet sich ein Freiraum 4 mit Einbauten 10, wie Lichtquellen oder dgl. und wenigstens einer Inspektionseinrichtung (Kamera, Sensoren), z.B. für eine Flaschenbodenkontrolle. Zur Überbrückung des genannten Freiraumes 4 ist die lichte Weite der zueinander weisenden Trume der beiden parallelen, die Riemenstation 2 bildenden endlosen Riemen 6 zumindest geringfügig enger gewählt als der Außendurchmesser einer Flasche 5, so dass eine auf dem Zuförderer 1 aufrechtstehend zugeführte Flasche 5 durch die Riemen an der Mantelfläche erfassbar und im weiteren Verlauf bis zum Abförderer 3 bodenfrei an den die Inspektionseinrichtungen bildenden Einbauten 10 im Freiraum 4 vorbeiführbar ist. Die zusammenwirkenden Trume können gleichgerichtet mit synchroner Geschwindigkeit gleich schnell oder mit einer bestimmten Geschwindigkeitsdifferenz angetrieben werden, um ggf. eine gewünschte, genau definierte Drehbewegung der Flaschen beim Durchlaufen der Riemenstation herbeizuführen.

Angetrieben werden die Riemen 6 durch jeweils ein Zahnriemenrad 7. Ferner sind für jeden Riemen 6 jeweils ein frei drehbar gelagertes Umlenkrad 8 und ggf. noch mehrere Stützrollen 9 vorgesehen. Beide Räder 7 und 8 drehen sich jeweils um vertikale Achsen.

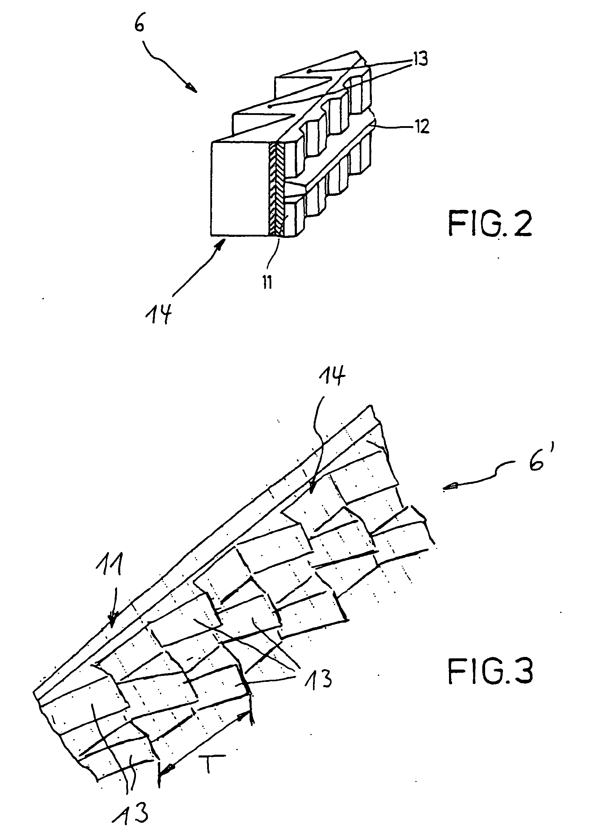

Aus der Fig. 2 ist der Aufbau eines Riemens 6 aus der antriebsseitigen Perspektive gesehen näher erkennbar. Das Grundgerüst bildet ein Zahnriemen 11 als Treibriemen, der auf halber Höhe eine in Längsrichtung verlaufende, elastische Stegleiste 12 zur Höhenführung des Riemens aufweist. An der von der Verzahnung wegweisenden Seite des Zahnriemens 11 ist eine elastische Auflage 14 angeordnet. Sie weist mehrere in gleichmäßigen Abständen längs zur Riemenerstreckung angeordnete zägezahnförmig ausgebildete elastische Elemente 13 aus PVC auf. Diese Sägezähne besitzen eine in Laufrichtung schräg nach vorne gerichtete Vorderflanke und eine entgegengesetzt zur Laufrichtung weisende, rechtwinklig zum Treibriemen ausgerichtet verlaufende Hinterflanke auf.

Fig. 3 zeigt eine abgewandelte, zweite Ausführung eines Riemens 6' von der gegenüberliegenden Seite aus dargestellt. Auch hier besitzt die Auflage 14 eine aus einer Vielzahl ebenfalls aus sägezahnartig geformten elastischen Elementen 13 gebildete, in sich einstückige und eine durchgehend geschlossene Oberfläche aufweisende Struktur. Die Elemente sind hier allerdings in drei übereinander liegenden Reihen angeordnet und in jeweils benachbarten Reihen mit einem dem halben Teilungsabstand des innerhalb einer Reihe von Elementen vorliegenden Teilungsrasters versetzt positioniert. Das Teilungsmaß T zwischen zwei aufeinanderfolgenden Sägezähnen in einer Reihe kann deren doppelter Breite entsprechen, d.h. es bestehen Zwischenräume mit der Breite eines Sägezahns. Das Teilungsmaß T liegt bevorzugt im Bereich von 20-30 mm.

Der zusammen mit der Stegleiste 12 den Treibriemen bildende Zahnriemen 11 und die die elastischen Elemente 13 aufweisende Auflage 14 können vorzugsweise ein gemeinsames Extrusions- oder Coextrusionsteil bilden. Es besteht aber auch die Möglichkeit, die Auflage 14 als separates Teil durch Kleben, Verschweißen oder ein sonstiges geeignetes Fügeverfahren mit dem Treibriemen zu verbinden.

## Patentansprüche

1. Inspektionsmaschine zum Kontrollieren von Gefäßen (5) oder dgl. Gegenständen mit
einer Riemenstation (2), die wenigstens zwei Riemen (6) umfasst, wobei die Riemen derart einander mit Abstand (4) gegenüberliegend in einer Umlaufebene angeordnet und derart mit gleicher oder voneinander abweichender, gleichsinnig gerichteter Geschwindigkeit antreibbar sind, dass die Riemenstation die Gefäße bodenfrei transportiert; und
wobei jeder der wenigstens zwei Riemen (6) einen Treibriemen (11) und eine mit den Gefäßen in Eingriff bringbare Auflage (14) umfasst, **dadurch gekennzeichnet dass** die Auflage aus einem elastischen Material mit geschlossener Oberfläche gebildet wird, und wobei die mit den Gefäßen in Eingriff bringbare Oberfläche der Auflage aus einer Vielzahl von noppen- und/oder finger- und/oder lamellen- und/oder sägezahnförmig geformten Elementen (13) gebildet wird, wobei alle die Oberfläche der Auflage bildenden Elemente in ihrer Gesamtheit einstückig ausgebildet sind, und wobei die Elemente mit gleichmäßigen Abständen (T), mit ihrer Breite entsprechenden freien Zwischenräumen, in wenigstens einer längs zur Förderrichtung verlaufenden Reihe angeordnet sind.

2. Inspektionsmaschine nach Anspruch 1, **dadurch gekennzeichnet dass** diese weiterhin umfasst:
einen Zuförderer (1), der die Gefäße am Boden abstützend heranführt und der Riemenstation vorgeordnet ist, und/oder
einen Abförderer (3), der ebenfalls am Boden der Gefäße angreift und der Riemenstation nachgeordnet ist.

3. Inspektionsmaschine nach wenigstens einem der Ansprüche 1 oder 2, **dadurch gekennzeichnet dass** diese weiterhin umfasst:
wenigstens eine Inspektionseinrichtung (10), die im Bereich der Riemenstation angeordnet ist.

4. Inspektionsmaschine nach Anspruch 1, **dadurch gekennzeichnet, dass** die mit den Gefäßen in Eingriff bringbare Oberfläche der Auflage strukturiert ausgebildet ist.

5. Inspektionsmaschine nach Anspruch 1, **dadurch gekennzeichnet, dass** das Teilungsmaß der Abstände im Bereich zwischen 20 und 30 mm liegt.

6. Inspektionsmaschine nach Anspruch 1, **dadurch gekennzeichnet, dass** die Elemente in mehreren, vorzugsweise drei, quer zur Förderrichtung versetzten Reihen angeordnet sind.

7. Inspektionsmaschine nach Anspruch 6, **dadurch gekennzeichnet, dass** die Elemente benachbarter Reihen längs zur Förderrichtung versetzt angeordnet sind, vorzugsweise um den halben Teilungsabstand von in einer Reihe liegenden Elementen.

8. Inspektionsmaschine nach wenigstens einem der vorhergehenden Ansprüche 1 bis 7, **dadurch gekennzeichnet, dass** die Auflage und darauf erhaben ausgeformte Elemente aus einem sterilisierbaren Material, insbesondere PVC, bestehen.

9. Inspektionsmaschine nach Anspruch 8, **dadurch gekennzeichnet, dass** der Treibriemen auf der von der Auflage wegweisenden Seite eine Antriebsverzahnung und ggf. einen vorzugsweise mittig verlaufenden Längssteg (12) aufweist.

10. Inspektionsmaschine nach wenigstens einem der vorhergehenden Ansprüche 1 bis 9, **dadurch gekennzeichnet, dass** der Riemen endlos ausgeführt ist.

## Claims

1. Inspection machine for checking containers (5) or similar objects, having a belt station (2) which comprises at least two belts (6), wherein the belts are arranged opposite one another at a distance (4) in one rotating plane in such a way and can be driven at the same speed or at different speeds in the same direction in such a way that the belt station transports the containers free of bottom, and wherein each of the at least two belts (6) comprises a driving belt (11) and a layer (14) which can be brought into engagement with the containers, **characterised in that** the layer is formed from an elastic material with a closed surface, and wherein the surface of the layer which can be brought into engagement with the containers is formed from a plurality of knob-shaped and/or finger-shaped and/or fin-shaped and/or sawtooth-shaped elements (13), wherein all elements forming the surface of the layer taken as a whole are integrally formed, and wherein the elements are arranged at uniform intervals (T), with free gaps corresponding to their width, in at least one row running longitudinally to the conveying direction.

2. Inspection machine according to Claim 1, **characterised in that** it further comprises a supply conveyor (1), which feeds the containers supporting them at the bottom and is arranged upstream of the belt station, and/or a removal conveyor (3) which likewise grips the bottom of the containers and is arranged downstream of the belt station.

3. Inspection machine according to at least either of Claims 1 and 2, **characterised in that** it further comprises at least one inspection device (10) which is arranged in the area of the belt station.

4. Inspection machine according to Claim 1, **characterised in that** the surface of the layer which can be brought into engagement with the containers is formed with a structure.

5. Inspection machine according to Claim 1, **characterised in that** the size of the separation of the intervals is in the range between 20 and 30 mm.

6. Inspection machine according to Claim 1, **characterised in that** the elements are arranged in a plurality of rows, preferably three rows, offset transverse to the conveying direction.

7. Inspection machine according to Claim 6, **characterised in that** the elements of adjacent rows are arranged offset longitudinally to the conveying direction, preferably by a half separation interval of elements lying in a row.

8. Inspection machine according to at least one of the preceding Claims 1 to 7, **characterised in that** the layer and raised elements formed on it consist of a sterilisable material, in particular PVC.

9. Inspection machine according to Claim 8, **characterised in that** the driving belt on the side pointing away from the layer has a driving toothing and possibly a longitudinal strip (12) preferably running centrally.

10. Inspection machine according to at least one of the preceding Claims 1 to 9, **characterised in that** the belt is designed as a continuous belt.

## Revendications

1. Machine d'inspection pour contrôler des récipients (5) ou des objets similaires, avec
une station à courroies (2) qui comprend au moins deux courroies (6), étant précisé que les courroies sont disposées dans un plan de circulation, face à face, avec un écartement (4), et aptes à être entraînées à des vitesses égales ou différentes, dans le même sens, de telle sorte que la station à courroies transporte sans fond les récipients ; et
étant précisé que chacune des deux courroies (6), ou plus, comprend une courroie d'entraînement (11) et une face d'appui (14) apte à être mise en contact avec les récipients,
**caractérisée en ce que** la face d'appui est formée à partir d'un matériau élastique à surface pleine, et étant précisé que la surface, apte à être mise en contact avec les récipients, de cette face d'appui est formée d'une multiplicité d'éléments (13) en forme de picots et/ou de doigts et/ou de lamelles et/ou en dents de scie, que tous les éléments formant la surface de ladite face d'appui sont formés dans leur ensemble d'une seule pièce, et que les éléments sont disposés sur au moins une rangée qui s'étend le long du sens de transport, avec des écartements réguliers (T) et avec des espaces intermédiaires libres correspondant à leur largeur.

2. Machine d'inspection selon la revendication 1, **caractérisée en ce qu'**elle comprend également :
un convoyeur d'amenée (1) qui amène les récipients en les portant au niveau du fond et qui est disposé en amont de la station à courroies, et/ou
un convoyeur d'évacuation (3) qui agit lui aussi sur le fond des récipients et qui est disposé en aval de la station à courroies.

3. Machine d'inspection selon l'une au moins des revendications 1 ou 2, **caractérisée en ce qu'**elle comprend également au moins un dispositif d'inspection (10), qui est disposé dans la zone de la station à courroies.

4. Machine d'inspection selon la revendication 1, **caractérisée en ce que** la surface, apte à être mise en contact avec les récipients, de la face d'appui, est structurée.

5. Machine d'inspection selon la revendication 1, **caractérisée en ce que** le pas des écartements est situé dans la plage entre 20 et 30 mm.

6. Machine d'inspection selon la revendication 1, **caractérisée en ce que** les éléments sont disposés sur plusieurs, de préférence trois rangées décalées transversalement par rapport au sens de transport.

7. Machine d'inspection selon la revendication 6, **caractérisée en ce que** les éléments de rangées voisines sont disposés en étant décalés longitudinalement par rapport au sens de transport, de préférence de la moitié du pas d'éléments situés sur une rangée.

8. Machine d'inspection selon l'une au moins des revendications 1 à 7 précédentes, **caractérisée en ce que** la face d'appui et les éléments formés en saillie sur celle-ci se composent d'un matériau stérilisable, en particulier du PVC.

9. Machine d'inspection selon la revendication 8, **caractérisée en ce que** la courroie d'entraînement présente sur son côté opposé à ladite face d'appui une denture d'entraînement et éventuellement une nervure longitudinale (12) qui s'étend de préférence au milieu.

10. Machine d'inspection selon l'une au moins des revendications 1 à 9, **caractérisée en ce que** la courroie est sans fin.
